(19) Europäisches Patentamt

European Patent Office

Office européen des brevets

(11) EP 0 707 886 A1

(12) EUROPEAN PATENT APPLICATION
published in accordance with Art. 158(3) EPC

(43) Date of publication:
24.04.1996 Bulletin 1996/17

(21) Application number: 94921872.1

(22) Date of filing: 08.07.1994

(51) Int. Cl.$^6$: **B01J 20/20**

(86) International application number: **PCT/RU94/00145**

(87) International publication number:
**WO 95/02451 (26.01.1995 Gazette 1995/05)**

(84) Designated Contracting States:
**CH DE FR GB IT LI NL**

(30) Priority: **09.07.1993 RU 93035644**

(71) Applicant: **INSTITUT KATALIZA IMENI G.K. BORESKOVA SIBIRSKOGO OTDELENIA ROSSIISKOI AKADEMII NAUK Novosibirsk, 630090 (RU)**

(72) Inventors:
• **BAKLANOVA, Olga Nikolaevna Omsk, 644001 (RU)**
• **DUPLYAKIN, Valery Kuzmich Omsk, 644099 (RU)**
• **SHIM, Valery Valentinovich Omsk, 644100 (RU)**
• **DAVYDOVA, Valentina Jurievna Omsk, 644123 (RU)**
• **PLAXIN, Georgy Valentinovich Omsk, 644081 (RU)**
• **LIKHOLOBOV, Vladimir Alexandrovich Novosibirsk, 630090 (RU)**
• **CHERNYSHOV, Andrei Kirillovich Omsk, 644029 (RU)**
• **ALFEEV, Vasily Sergeevich Omsk, 644092 (RU)**

(74) Representative: **Godwin, Edgar James MARKS & CLERK, 57-60 Lincoln's Inn Fields London WC2A 3LS (GB)**

(54) **ARTICLE MADE OF POROUS CARBONACEOUS MATERIAL AND PROCESS FOR PRODUCING THE SAME**

(57) The proposed article, consisting of a porous carbonaceous material (fig.1), is produced by extruding a soft carbonaceous paste through a die, the paste consisting of 30-60% dispersed carbon, a solvent and 2-10 % of a carbon-containing binder. Extrusion takes place at a pressure of 20-60 kg/cm$^2$ and the article thus formed is then heat treated, firstly, in a non-oxidizing environment in the presence of hydrocarbons, the ratio of carbon and hydrogen being 0.25-1.0, until the mass of the article has increased by 20-200%, and subsequently in an active environment. According to the invention, the article is produced from three-dimensionally homogeneous carbon with a mesoporous structure and pore-size distributions in the 100-2,000 Å and 20-100 Å ranges. For each article, the ratio of the outer surface geometry to the volume of material is 4-100 m-1, the ratio of the thickness of the dividing walls between the channels and the outer walls is 1:2- 1:10, and the unit surface area is 100-2,000 m2/g.

*FIG.1*

EP 0 707 886 A1

## Description

The invention relates to producing articles consisting of porous carbonaceous material and can find applications in petrochemical and chemical industries for the production of catalyst carriers and adsorbents in electric catalysis, in medicine for the production of sorbents as well in electrochemical processes for the manufacture of electrodes.

Porous carbonaceous materials and articles therefrom are widely employed in catalytic and adsorption processes. In these processes the efficiency of service of carbonaceous materials and articles, including hydrodynamic and kinetic parameters, are primarily determined by the sizes of their porous structure, microstructure, external shape, sizes and strength of the articles. For example, the optimum structure for liquid phase adsorption and catalytic processes is an ultramicro-and mesoporous structure of carbonaceous materials with a preferable pore size of from 15 to 500 Å (see 1. Boreskov G.K., Catalysis. Problems of Theory and Practice, Novosibirsk, Nauka Publishers, 1987). The microstructure of a carbonaceous material defined by an average interplanar distance ($d_{002}$) and an coherent dissipation area (CDA) produces, in some cases, the dominating influence both on the formation and properties of the active ingredient of catalysts and on service and physical (e.g. electrical conduction) properties of carbonaceous materials and articles made therefrom.

An external shape plays no small role in chemical and electrochemical processes. The shape frequently determines hydrodynamic and kinetic process parameters and can be defined as the relation between the outer surface geometry and the volume of the material in an article. By choosing the corresponding shape of catalyst grains, one can increase the share of free volume and reduce hydraulic resistance of the bed by several times without having to decrease the activity of the unit of volume of the bed. For processes under atmospheric pressure,it is desirable to employ catalysts to the form of grains with a considerably larger relationship between the outer surface and the volume and a larger free volume between the grains. Rings with thin walls, convoluted rods, petals or the like meet these requirements. Still more effective is the use of a regular catalyst packing in the form of cylindrical members located parallel with the direction of flow of the reaction mixture and having a larger free cross section. However, a shank, a sphere, a plate or a tablet have been, up to the recent time, most widely used shapes of catalysts and sorbents. This circumstance is primarily related to the fact that the manufacture of members of a more intricate shape is made difficult because materials being extruded or molded display quite a number of effects which cause stresses in the final product and which initiate disintegrity of the members. The latter effect may include the Barrus effect (post-extrusion swelling) and thermal shrinkage.

The first of the effects is related to normal stresses ($\tau H$) that are effective in the direction perpendicular to the flow of the extrudate. The presence of normal stresses under certain molding conditions may be counter-balanced by the forces of surface tension of the outer layers. However, exceeding the $\tau H$ level higher than the critical one causes coarsening of the surface,appearance of rough areas, burrs and even ruptures of the external surface.

The second of the effects is thermal shrinkage related to a smaller volume of the carbon element which results from removing the liquid phase and volatile components that are formed when the hydrocarbon binder becomes carbonized and also causes disintegrity of the article, e.g. cracking.

Known in the art are articles from a porous carbonaceous material of an intricate shape in the form of rings, small tubes, three to five petals, tablets with four or more passages, cylindrical or some other form (Block Carriers and Honeycomb Catalysts, Perm, 1990, Summaries of Reports, at the 1st All-Union Conference). These articles are disadvantageous in that they have low service characteristics that result from a small ratio of the outer surface to the volume the material in the article.

Well known in the art are the articles consisting of a porous carbonaceous material of an intricate shape, chosen as the closest prior art, having a high specific adsorption surface of not greater than 2000 m²/g and a pore volume of more than 0.2 cm³/g. Articles are made of two modifications of a carbonaceous material. The framework and the wall of the article have two layers, that is, a layer (less than 30% with respect to the wall thickness) of highly porous carbon having preferably a microporous structure is located on top of dense glassy carbon having low adsorption properties ( 2. Japanese Patent No. 1-39988, CO4B, BO1J, 1989).

The prior art articles are disadvantageous in that the material they are made of have low specific adsorption capacity and low bonding strength of a porous material with a dense glassy substrate. These factors cause breakdown and falling down of the active porous carbonaceous layer. Besides, the active microporous carbonaceous layer has low efficiency of liquid phase adsorption and catalytic processes. The other disadvantage of the prior art articles resides in a double layer structure of walls of the channels. This circumstance imposes limitation on the minimum thickness of walls and reduces the strength properties of articles.

The prior art articles are essentially disadvantageous in that the thickness of the dividing walls of the honeycomb and that of outer walls of the article is the same. Such a structure reduces the strength properties of articles and requires that the article be further packed into a strong outer shell [2].

Well known in the art is a process for producing porous carbonaceous articles comprising mixing a carbonaceous filler (e.g. coke and carbon black) with a binding agent such as phenolformaldehyde resin and pitch, molding the articles from a mixture and subsequently carbonizing the semiproducts at 1000°C or higher for 240 to 300 hours (3. US Patent No. 3219731, Class 264-29, 1965). The prior art is disadvantageous in that the resulting articles have low adsorption properties.

Well known in the art is a process for producing carbonaceous articles of an intricate shape, comprising preparing a mixture of dispersive activated carbon with a binding agent such as methyl cellulose and a phenolformaldehyde resin, extruding and drying the articles (4. Japanese Patent No. 63-19213. BO1J; CO1B, 1988). The prior art process is disadvantageous in that the prior art Produced articles have a porous structure which is not optimum for catalysis and liquid phase adsorption processes (it is difficult to control the process of molding such a structure) as well as low strength characteristics.

Well known in the art is a process for producing articles consisting of a porous carbonaceous materials of an intricate shape chosen as the closest prior art comprising mixing dispersive carbon such as activated carbon with a binding agent, e.g. a thermosetting resin, extruding at a pressure of more greater than 90 kg/cm$^2$, drying and heat treating at a temperature from 500 to 1200°C successively in a non-oxidizing and active environment till a final product is obtained (2). The prior art process is disadvantageous in that the resulting articles have preferably a microporous structure and does not make it possible to produce highly efficient catalysts and adsorbents for liquid phase processes.

Besides, high pressures developed during the extrusion process cause deformation and breakdown of thin dividing walls and clogging of channels in the articles owing to the Barrus effect and also lead to an elastic turbulence phenomenon manifested as various defects such as dullness, "shark skin" and "orange peel" on the article surface.

The extrusion parameters as disclosed in the prior art process do not enable one to produce porous carbonaceous articles of an intricate shape with a smooth surface and well molded channels (dividing walls).

The object of the claimed invention is to produce articles made of a porous carbonaceous material. These articles are very serviceable in gas - and liquid-phase adsorption catalytic and electrochemical processes, very strong and have a defect-free appearance. This object can be obtained by providing an article which has, like the closest prior art, high characteristic values such as an adsorptive surface (100 to 2000 m$^2$/g), a pore volume (0.2 to 2.0 cm$^3$/g) and an outer surface geometry (0.00001 to 10 m$^2$). At the same time, the article has high values of the ratio of the outer surface geometry and the volume of the carbonaceous material in the article (S/V = 4 to 100 m$^{-1}$).

Besides, porous carbon in the given articles has three dimensional homogenety with $d_{002}$= 3.35 Å and has a mesoporous structure with pore distribution maximums in the region from 100 to 200 Å and from 20 to 100 Å . The article has a honeycombed structure and a ratio of the thickness of the dividing walls between the channels and the outer walls is from 1:2 to 1: 10.

The accepted S/V ratio makes it possible to effectively use articles as catalyst carriers in which the active ingredient should be located in a thin "peel" adjoining the external surface of the article. If the S/V ratio varies from 4 to 100 m$^{-1}$, the size of the outer surface of the carbonaceous article makes it possible to apply up to 3 wt% Pd and up to 5 wt% Pt in a 10 mc layer at the same local concentration which cannot be achieved when using, e.g. balls (the local concentrations for the peel are as high as 40 to 60 wt%). This advantage makes it possible to use the active ingredient to a still greater extent.

The producing articles with a S/V ratio greater than 100 m$^{-1}$ entails certain technological difficulties and is difficult to accomplish for carbonaceous material due to the fact that during extrusion of plastic carbonaceous compositions through filters with thin ( 0.1 mm) channels, shear stresses exceed the plastic strength of the material with the result that the discontinuity of the flow is broken off.

For articles with a S/V ratio of less than 4 m$^{-1}$ the external shape does not produce any essential effect on hydrodynamic and kinetic process parameters, and in this case, it is more desirable to employ cheap catalysts of a simple shape such as a sphere or a shank.

The second distinction of the claimed articles is high three-dimensional homogeneity and degree of order in the structure of carbon particles that form an article, i.e. in that carbon particles are located and interconnected in such a manner that a high three dimensional homogeneity of properties is maintained. Besides, particles proper have a more perfect microcrystalline structure (defined by $d_{002}$ values of 3.35 to 3.50 Å ). This structure is formed of carbon monocrystallites located more regularly with respect to each other. This factor renders the carbonaceous articles highly strong and eliminates anisotropic properties of the material in different directions.

The catalytic properties of the catalysts in carriers as well as the state of the active ingredient on the carrier surface is determined to a large measure in that the microstructure of the carrier and of the active ingredient is compatible. For example, the fact that the microstructures the claimed carbonaceous material and of some active ingredients (e.g. $MoS_2$ and $WS_2$) are identical causes epitaxial reaction of both basal planes of the carrier and the active ingredient and the profile planes thereof. Oriented growing into of the active ingredient with the surface of the material renders the active ingredient highly dispersive, and hense renders the catalyst highly active in the chemical process.

If systems contain dispersive metal particles on carbon carriers, their catalytic activity and stability depend substantially on the place of location. For example, palladium particles disposed on the profile planes of graphite microcrystallites, on the one hand, are more dispersive and therefore more active in terms of 1 gram of active metal and, on the other hand, are more stable to agglomeration (5). The location of the active ingredient on the basal planes of a carbonaceous material promotes formation of palladium crystallities of a larger size or intergrown crystallites which are more preferable for conducting the process under conditions that promote removal of the active component (an aggressive medium). The location of the active component on disordered carbon having a great number of micropores leads to blocking of the active ingredient on the micropores and, hence, to decreasing their catalytic activity.

Thus, the carbonaceous material with a three-dimensional ordered structure in which a porous space is formed by basal and profile planes of graphite crystallites is the optimum carrier both for laminated systems and for systems having close packed lattices.

Besides, the higher the three-dimensional homogeneity and ordering of the material, the higher the electrical conduction of the article. This factor makes it possible to conduct electrochemical and electrocatalytic processes in three-dimensional isotropic continuous-flow systems. This is of great practical importance, for instance, in the recovery of metals from dilute aqueous solutions: namely, in the recovery of sewage resulting from electroplating processes, in the treatment of Pt catalysts, in the hydrometallurgy of gold, and the like.

The claimed articles have a specific conductivity from 0.1 to 2.0 Ohm · cm and the value of electrical conduction may vary substantially by varying the methods of production and the geometrical sizes of articles.

The letter circumstance makes it possible to produce mechanically strong electrochemical electrodes having a substantially similar or controllable value of the electrical potential over the entire electrode thickness (by varying electrical conduction) and to organize more effectively various electrochemical processes for the recovery of metals from dilute solutions.

The third distinction of the claimed articles is the fact that they have a mesoporous structure with a maximum part size distribution in the range from 100 to 2000 Å.

In adsorption and catalysis processes in which the rate depends to a large measure on reactant mass transfer processes, the most effective are porous materials with a monomodal pore distribution and a pore size distribution in the range from 100 to 2000 Å, for , on the one hand, reacting molecule mass transfer processes occur most effectively within this range, and on the other hand, such carbonaceous materials possess simultaneously high adsorption properties. Pore sizes of greater than 2000 Å perform preferably transport functions, since their surface is insignificant. For a monoporous adsorbent with a pore size of less than 100 Å, the surface as well as the active components on carriers are used less effectively due to increasing intradiffusion complications.

The fourth distinction is the fact that the material may further have pores with a maximum pore size distribution in the range from 20 to 100 Å, i.e. it may have a biporous (bimodal) structure. The optimum porous structure which causes the highest process rate may be selected for each catalytic and adsorption process according to the conditions under which the process occurs and the kinetic mechanisms. For some processes the transfer to a biporous structure with additional maximums in the range from 20 to 100 Å makes it possible to render the process more selective and effective. The presence of large pores, together with small pores, in which the reactants are transferred owing to molecular diffusion makes it easier for the reactants to penetrate into the catalyst grain interior and increases by 10 to 100 times the reaction rate as compared with that in homogeneously porous structures.

The fifth distinction of the claimed articles is the fact that they have a honeycomb structure and a ration of the thickness of passage partitions and that of the outer wall from 1: 2 to 1:10. Service and strength properties of articles may be substantially improved if articles have a honeycomb structure and a ratio of the thickness of partitions and walls from 1:2 to 1:10. In case of these ratio values, together with high specific absorption properties, articles possess high mechanical strength. This factor offers additional advantages during the service period. In this case the article proper may be used as the constructional member of a column or reactor less an additional shell made of a stronger material.

In case of the ratio of greater than 1:10, the strength properties improve and simultaneously specific adsorption properties of articles deteriorate and also there is a greater risk of the outer wall of the article being cracked during the producing process.

The ratio of less than 1:2 does not make it possible to produce articles with sufficient strength and improved characteristics.

The other problem being solved in the present invention is to develop a process that will enable one to produce articles of an intricate shape made of a porous carbonaceous material, which are very effective in gas and liquid phase adsorption, catalytic and electrochemical processes.

This problem is solved by providing a process which comprises preparing a mixture of dispersive carbon with a carbon-containing binder, extruding, drying, heat treating the articles at 500 to 1200 °C successively in a non-oxidizing and active environment the content of the components in the mixture being as follows: 30 to 60 % dispersed carbon; 2 to 10 % the binder being carbonized; and the solvent, the balance. The mixture is extruded at a pressure of 20 to 60 kg/cm$^2$ and the non-oxidizing heat treatment is carried out in the presence of gaseous hydrocarbons at a C/H ratio from 0.25 to 1.0 till the weight of the article is increased by 20 to 200 % by weight.

In the claimed process the mixture is extruded at a pressure of 20 to 60 kg/cm$^2$ unlike the closest prior art (more than 90 kg/cm$^2$). High pressure conditions render the boundary and central layers of liquid to move at different rates, which fact causes deformation, skewing and rupture of the internal thin dividing walls . Resides, a profile of flow is readjusted at the die inlet, which fact causes pulsations of the outgoing stream. These pulsations lead to substantial deformations (swelling) of the outgoing extrudate.

In this case, in order to achieve the established (stable) flow in the die, its molding part should he made longer. The latter circumstance is extremely undesirable, for there is a growing risk of manufacturing the final article with displaced and deformed partitions. The claimed extrusion conditions at a pressure of 20 to 60 kg/cm$^2$ make it possible to produce of high-quality articles.

In this case, a parabolic profile of the flow does not develop and all the elementary layers of the dispersive phase are moving substantially at similar rates with the result that the extrudates have an uniform smooth surface with well molded internal members. The low pressing pressure is of great importance, since it allows constructing and manufacturing dies for articles with very thin (0.1 to 1 mm) and narrow (0.1 to 2.0) channels namely such articles with a high S/V ratio are most effective in sorption and catalysis processes.

A pressing pressure of higher than 60 kg/cm$^2$ causes ruptures on the external surface of articles. These ruptures develop because the rates of travel of the outer layers of the plastic paste are slower than those in the centre of the flow. These phenomena finally cause destruction of the article shell.

The other distinction is the fact that the non-oxidizing heat treatment is carried out in an atmosphere of gaseous hydrocarbons till the weight of articles is increased by 20 to 200 % by weight.

Heat treatment of the dried articles in a non-oxidizing inert medium at a temperature from 500 to 1200 °C causes carbonization of carbonaceous components in a dispersive medium in which volatile components are recovered and carbon lands between filler particles are formed. The porous structure formed thereat depends on the size of the dispersive filler and by the density of particles being packed in the article. However, the articles produced after heat treatment have low strength characteristics. Heat treatment in an environment of gaseous hydrocarbons promotes formation of a specific graphite-like carbonaceous material with a three-dimensional ordered microstructure on the surface and in the volume of articles. Besides, deposition of a graphite-like carbonaceous material that results from pyrolysis of gaseous hydrocarbons leads to increased strength of the articles on the surface and in the volume of the article.

An increase in the weight of the article during the heat treatment operation by less than 20 % by weight does not bring about any substantial increase in strength, and an increase in the weight of the article by more than 200 % by weight results in a reduced total volume of pores and in inferior absorption properties of the article. Besides, heat treatment in an environment of gaseous hydrocarbons promotes reduction in or elimination of defects on the surface including microcracks that result from thermal shrinkage of the article during the drying and heat treatment operations.

The third distinction of the producing process is the fact that a mixture of dispersed carbon and a dispersive environment contains from 30 to 60 wt% dispersed carbon and from 2 to 10% the components being carbonized that improve the plastic strength of the paste, and a solvent. The content of 30 to 60 wt % dispersed carbon in the mixture affords the optimum plasticity and viscosity of the composition and makes it possible to obtain well molded articles with defect-free outer surface and dividing walls. The dispersive environment components being carbonized may include organo- and water-soluble linear polymers, e.g. polyvinyl acetate, polyethylene oxide, polyacrylic acid, polyacrylonitrile, carboxymethyl cellulose with a polymerization degree of at least 40, and also natural organic adhensives such as hide adhesive.

The use of said components in an amount from 2 to 10 wt% affords the optimum plasticity and strength of the composition that decrease the manifestation of the Barrus effect and reduce thermal shrinkage of the article when it is subsequently dried.

The content of less than 30 wt% dispersed carbon and 2 wt% the components being carbonized in the mixture results in deforming the extruded article and does not allow retaining the desired shape and the sizes of the honeycomb structure of the article.

A mixture containing more than 60% dispersed carbon and 10% the components being carbonized possesses improved viscosity. This requires high pressing pressure to carry out extrusion and does not enable one to produce articles of an intricate shape and high mechanical strength.

The fourth distinction of the claimed process is the fact that the non-oxidizing heat treatment (till a weight increase is obtained in the range of 60 to 100 %) is carried out in hydrocarbons at a C/H ratio of 0.25 to 0.5 and subsequently in hydrocarbons at a C/H ratio of 0.5 to 1.0.

Heat treatment of the articles in the presence of hydrocarbons at different C/H ratios makes it possible to deposit various carbon modifications on the surface and in the volume of the article. These modifications differs in microcrystalline structure, reactivity with respect to oxidizing agents and mechanical strength thus offering additional opportunities to regulate the properties and the porous structure of articles during the heat treatment operation in non-oxidizing and active environments.

Heat treatment in hydrocarbons at a C/H ratio of 0.25 to 0.5 makes it possible to obtain carbon having large size crystallities (La~150 to 200 Å) on the surface and the volume of articles, the crystallines are oriented and closely packed with respect to each other. This factor renders the carbonaceous article mechanically stronger.

Heat treatment in hydrocarbons at a C/H ratio of 0.5 to 1.0 makes it possible to deposit finer carbon crystallites (La ~ 35 to 70 Å) and more reactive carbon crystallites on the surface and in the volume of carbonaceous articles. Interaction of said crystallites at the heat treatment stage in an oxidizing medium with the components of the latter forms a mesoporous space in the carbonaceous material. This factor improves adsorption and catalytic properties of articles.

Heat treatment in hydrocarbon at a C/H ratio of 0.25 to 0.5 till a weight increase of less than 60 wt % is attained does not produce any appreciable improvement in the strength of articles and does not make it possible to regulate the porous structure of the article.

Heat treatment till a weight increase of more than 100 wt % is attained decreases the amount of carbon deposited from hydrocarbons at a C/H ratio of 0.5 to 1.0 and hence does not provide any opportunities to regulate purposefully the porous structure and adsorption properties.

Constructional porous carbonaceous materials and articles made therefrom can be produced in any type of reaction devices at a temperature from 500 to 1200 °C.

Articles made of a porous carbonaceous material may be used as carriers for the production of a wide range of the catalysts on carriers having different active components, e.g. metals of the Group VII of Periodic Table such as palladium, platinum, nickel, cobalt or the like as well as with other active metals and compounds thereof.

Carbonaceous articles of an intricate shape may be used as porous electrodes in hydrometallurgical or electrochemical processes in which nonferrous, rare and noble metals such as Cu, Au, Pt, Pd, Re or the like are recovered.

Carbonaceous unit type articles can be used as hemosorbents for the recovery of toxins of different nature from blood and biological fluids.

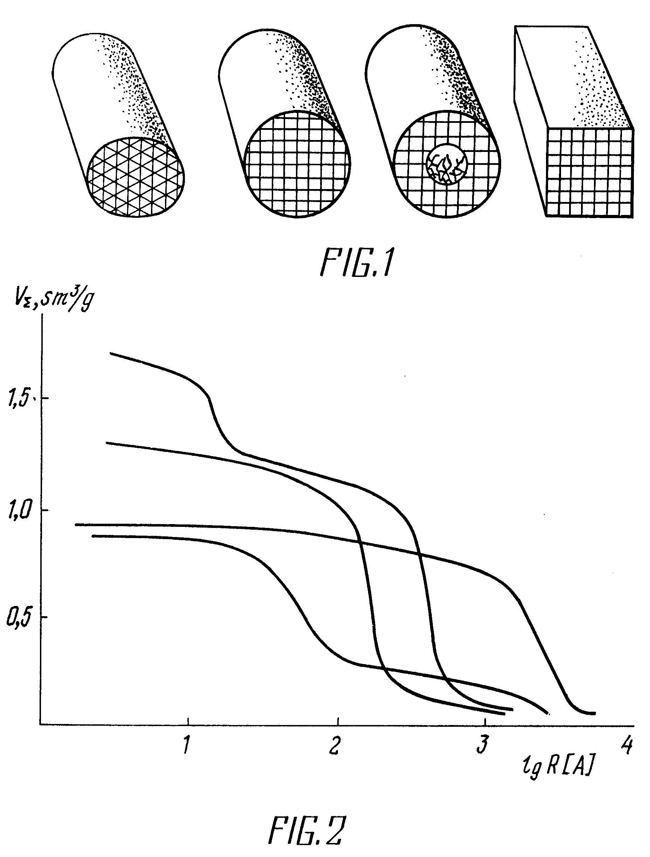

Fig.1 depicts photographs of articles made of a porous carbonaceous material which support the claimed properties.

Fig.2 depicts integral pore size distribution curves.

In the examples given below $d_{002}$ and La are determined by a X-ray diffraction method:

$d_{002}$ was determined according to the location of diffraction peak 002.

La was determined according to the width of diffraction peak 110.

The total volume, radii and pore distribution according to radii were determined by mercury porometry methods and adsorption methods.

The specific surface of the material was determined by a method of argon thermal adsorption.

The crushing strength was determined by using a HP-device MR9C.

The electrical conduction of the carbonaceous material was evaluated by the value of active resistance R measured by means of a TT-3 type ohmmeter and calculated by the formula

$$R = \frac{P\,1}{S}$$

wherein

P is specific resistance,

$$\frac{ohm \cdot mm^2}{m}$$

l is the length of a specimen, m

S is the cross sectional area, $mm^2$

Catalysts obtained on unit type carbonaceous articles were tested in model reactions:

hydrogenation of benzoic acid;

actoxylation of propylene;

hydrogenolysis of throphene

Catalysts were prepared according to the following procedure

5 g of block-type carbonaceous carrier was impregnated according to a moisture capacity of 8 ml of an aqueous ammonia solution containing 0.26 g of $Ni(NO_3)_2$ and 0.48 g of $(NH_4)_6Mo_7O_{24}$. After drying under a JR lamp the catalyst was sulfurized in $H_2$ at 400°C. The composition and properties of the catalyst are presented in Table 1.

The catalyst was tested in a reaction of hydrohenolysis of thiophene at 300 °C and a hydrogen pressure of 20 atm. The catalyst activity was $81 \times 10^4$ mole thiophene per 1 g · atom (Ni+Mo) (Table 1). This value exceeds of the activity of a catalyst based on a granular carbon carrier by 10 times.

Honeycomb carbonaceous articles were tested as a hemosorbent in a stand experiment following the Standard Okoneka methods: stabilized anticoagulant blood of animals (dogs) was perfusated by means of a roller pump through 5 $cm^3$ capacity columns at a blood to sorbent ratio of 5:1. The content of the blood elements (erythrocyte, leukocyte, and thrombocyte), components of metobolism (glucose, protein and residual nitrogen), vital microelements (potassium and sodium) and also toxic metobolites and the content of permanent bacteria of gram-negative flora were investigated in blood and plasma samples.

The content of Bacillus pyocyaneous in blood after single blood passage through a carbonaceous unit was reduced by 28 to 53%. In this case less damage was recorded in the process of sorption of blood elements as compared with sorption on granular hemosorbents.

The article as a porous electrode was tested in the process of electrochemical recovery of $Cu^{2+}$, $Pt^{2+}$, $Re^{2+}$ ions in 400 ml capacity electrochemical cell. The solution purified was fed by means of a peristaltic pump at a rate of 1.0 to 1.8 ml/min.

The anode was porous titanium, and the current intensity was varied within 20 to 140 μA. This factor promoted the highest degree of metal recovery.

In the tests during circulation of the solution at a rate of 1.0 to 1.8 ml/min through an electrode (cathode) in the form of a unit at a current intensity of 20 μA the concentration of copper ions was reduced from 100 mg/l to 50 mg/l per one cycle of exchange of wash water in the catholyte.

Recovery of $Pt^{2+}$ and $Re^{2+}$ from dilute acid solutions during treatment of spent Pt and Re reforming catalysts showed that at a current intensity of 100 A and a solution circulation rate of 1.0 to 1.8 ml/min through a unit-type carbonaceous cathode the content of $Pt^{2+}$ in the solution was reduced by about 3 times (from 1.5 mg/ml to 0.54 mg/ml), and that of $Re^{2+}$, by 1.6 to 1.8 times (from 1.43 mg/ml to 0.8 mg/ml).

Example 1 (as described in the closest prior art)

60 g of a phenolformaldehyde resin powder was mixed with 30 g of a dispersed carbon powder (200 mesh, activated carbon BAY). To the resulting mixture were added 31 g of a water-soluble phenol resin KFMT and 7 ml of 20 % KMC solution. The mixture was thoroughly stirred in a blade mixer and kept there for 6 hours. The mixture was extruded on a plunger extruder at a pressure of 120 $kg^2$/cm through a die with square cells and an outer diameter of 40 mm. At the given pressure the mixture prepared as described in the closest prior art was pressed out only through the die with a mesh size of more than 3 mm and a wall-thickness of more than 0.8 mm. In this case the article has a satisfactory external appearance and a shape. The article was dried at a temperature of 100°C till removing of water and solidified at a temperature of 140 to 160°C for 2 hours. The solidified article was carbonized by increasing the temperature up to 800°C at a rate of 20°C/hr in an atmosphere of argon and kept at this temperature for 3 hours. The carbonized article was activated at a temperature of 850°C in an atmosphere of steam for 1 hour and further cooled in an inert environment to room temperature at a rate of 45°C/hr.

The resulting carbonaceous articles have a smooth outer surface with clearly molded cells and the following characteristics:

| Geometrical size, mm | 40x40x92 |
| --- | --- |
| Outer geometrical surface, $m^2$ | 0.00089 |
| Cell width,mm | 3 |
| Thickness of divising walls, mm | 0.8 |
| Outer wall thickness, mm | 0.8 |
| S/V ratio, $m^{-1}$ | 1.54 |
| Specific adsorption surface, $m^2$/g | 1200 |
| Total pore volume, $cm^3$/g | 0.4 |
| Maximum pore size distribution, Å | 7-15 |
| $d_{002}$, Å | 3.67 |
| Crushing strength along end face, $kg/cm^2$ | 25 |

Example 2

65g of dispersive carbon with a particle size of 200 Å was mixed with 60 ml of an aqueous dispersive environment contained 3 wt % polyelectrolyte, 2 wt % organic glue, 0.5 wt % a surface active agent OP-7, 1 wt % concentrated $HNO_3$. The mixture was thoroughly stirred in a blade mixer and extruded on a plunger extruder at a pressure of 40 $kg/cm^2$ through a die with a square cell of size of 1 mm, a well thickness of 0.3 mm and an outer wall thickness of 1.5 mm. The article was dried at room temperature for 24 hours and then at 105°C till water is removed for 2 hours. Dried articles were placed into a quartz reactor with a diameter of 80 mm and an external electric heater in a current of argon (140 l/hr) to a temperature of 800°C at a rate of 20°C/min, kept at the given temperature for 30 minutes, then instead of argon, a mixture of argon and propane was fed into the reactor at a 10:1 ratio at a rate of 180 l/hr and the articles were heat treated at a temperature of 850°C till their weight was increased by 120 wt %. Steam was then fed into the reactor instead of a mixture of inert gas and hydrocarbon at a rate of 0.8 kg steam per 1 kg of the weight of the articles, and the articles were heat treated with steam for 60 minutes. The articles were then cooled in an inert medium to room temperature at a rate of 45°C/hr.

The resulting carbonaceous articles had a smooth surface with clearly formated cells and the following physico-chemical and adsorption properties.

| Geometrical size, mm | 40x40x150 |
|---|---|
| Outer geometrical surface, $m^2$ | 0.000241 |
| Cell width, mm | 1.0 |
| Thickness of the dividing walls between the channels, mm | 0.3 |
| Thickness of outer wall, mm | 1.5 |
| S/V ratio, $m^{-1}$ | 4.2 |
| Total pore volume, $cm^3/g$ | 0.8 |
| Specific adsorptive surface, $m^2/g$ | 450 |
| Maximum pore size distribution, Å | 400 |
| $d_{002}$, Å | 3.45 |
| Crushing strength along end face, $kg/cm^2$ | 41.0 |

Examples 3-9

The conditions of Examples 3-9 were similar to those in Example 2. The articles differed in geometrical sizes, parameters of the porous structure and physico-chemical properties which are summarized in Table 2.

Examples 10-22

The conditions of Examples 10-22 were similar to those in Example 2. They demonstrated the influence of the distinctive features of the process for obtaining structural and strength parameters of the claimed articles.

The results obtained in Examples 10-22 are summarized in Table 3.

Examples 23-27

The conditions of Examples 23-27 were similar to those on Example 2. They were different in that the heat treatment in a non-oxidizing environment was carried out in two stages.

In the first stage the articles were heat treated in hydrocarbons at a C/H ratio of 0.25 to 0.5 (0.25 for $CH_4$ and 0.33 for $C_3H_6$) till a weight increase of 60 to 100 wt % was achieved, and in the second stage in hydrocarbons at a C/H ratio of 0.5 to 1.0 (0.5 for $C_2H_4$ and 1.0 for $C_2H_2$) to the weight increase indicated in Table 4.

In Examples 23-27 the -content of dispersive carbon in the compositions was 50 wt %, in the mixture component being carbonized 7 wt %, the pressing pressure was 44 $kg/cm^2$ (see Table 4).

The results thus reported demonstrate that the claimed articles produced under the claimed process conditions have high S/V ratio values, a mesoporous structure, high strength properties and high effectivity in adsorption, catalytic and electrochemical processes.

Table 1

| Composition of active ingredient | Content of active ingredient, wt % | Content of metals, wt % | | Content of sulfur, wt % | Characteristics of carrier | | | | | Activity in hydrolysis reactions at 300 °C |
|---|---|---|---|---|---|---|---|---|---|---|
| | | P Ni, CO | M Mo, W | | Specific surface, $m^2/g$ | Pore volume R 30A° $cm^3/g$ | Strength, $kg/cm^2$ | Outer diameter of unit, mm | Channels width mm | Thiophene mole / [g x at (P+M) xC] $\times 10^4$ 1/hr |
| $NiW_2S_{4,4}$ | 14 | 1,4 | 9,0 | 3,0 | 200 | 0,73 | 42 | 13 | 0,5 | 81 (20) |

9

Table 2

| Nos | S/V ratio, $m^{-1}$ | External geometr. surface, $m^2$ | Cell width, mm | Thickness, mm dividing walls | outer walls | Number of cells | $d_{002}$ | Maximum pore size distribution, $\overset{\circ}{A}$ | Total pore volume, $cm^3/g$ | Specific adsorp. surface, $m^2/g$ | Crushing strength, $kg/cm^2$ |
|---|---|---|---|---|---|---|---|---|---|---|---|
| 1 | 1.54 | 0.00089 | 3.0 | 0.8 | 0.8 | 177 | 3.67 | 7-15 | 0.45 | 1200 | 35 |
| 2 | 4.2 | 0.000241 | 1.0 | 0.3 | 1.5 | 441 | 3.45 | 400 | 0.61 | 450 | 41 |
| 3 | 20 | 0.00012 | 1.0 | 0.3 | 1.5 | 100 | 3.47 | 100 | 0.53 | 780 | 52 |
| 4 | 50 | 0.001 | 1.5 | 0.1 | 1.0 | 196 | 3.44 | 20.400 | 0.81 | 939 | 39 |
| 5 | 81 | 0.010 | 3.0 | 1.0 | 2.0 | 100 | 3.45 | 600 | 0.68 | 530 | 78 |
| 6 | 100 | 0.001 | 1.5 | 0.45 | 0.9 | 36 | 3.45 | 60.800 | 0.72 | 721 | 64 |
| 7 | 100 | 5.0 | 3.0 | 0.9 | 0.9 | 784 | 3.49 | 490 | 0.73 | 693 | 21 |
| 8 | 100 | 10.0 | 2.0 | 0.6 | 1.8 | 360 | 3.47 | 2000 | 0.93 | 182 | 28 |
| 9 | 81 | 0.003 | 1.5 | 0.4 | 2.0 | 225 | 3.44 | 60.2000 | 0.91 | 482 | 34 |

Table 3

| Nos | Content of dispersed carbon in paste, wt % | Content of components being carbonized, wt % | Extrusion pressure, kg/cm² | External appearance of extrudates surface | Weight increase, wt % | C/H ratio | Total pore volume, m²/g | Specific surface, m²/g | Crushing strength, kg/cm² | Maximum pore size distribution, °A |
|---|---|---|---|---|---|---|---|---|---|---|
| 10 | 27 | 7 | 18 | dull with scores | 120 | 0.33 | 0.80 | 890 | 45 | 800-1000 |
| 11 | 31 | 7 | 25 | smooth | 120 | – | 0.70 | | 62 | 600-800 |
| 12 | 50 | 7 | 44 | smooth | 120 | – | 0.70 | | 76 | 400-600 |
| 13 | 60 | 7 | 58 | smooth | 120 | – | 0.60 | | 78 | 400-600 |
| 14 | 62 | 7 | 65 | smooth, many transverse cracks | 120 | – | 0.60 | | 96 | 300-500 |
| 15 | 50 | 1 | 44 | smooth | 120 | – | 0.61 | 620 | 61 | 400-600 |
| 16 | 50 | 2 | 44 | smooth | 120 | – | 0.61 | 590 | 85 | 400-600 |
| 17 | 50 | 7 | 44 | smooth | 120 | – | 0.65 | 510 | 92 | 400-600 |
| 18 | 50 | 10 | 44 | smooth | 120 | – | 0.58 | 480 | 94 | 400-600 |
| 19 | 50 | 7 | 44 | smooth | 15 | – | 0.80 | 680 | 42 | 400-600 |
| 20 | 50 | 7 | 44 | smooth | 20 | – | 0.78 | 530 | 68 | 400-600 |
| 21 | 50 | 7 | 44 | smooth | 120 | – | 0.70 | 600 | 92 | 400-600 |
| 22 | 50 | 7 | 44 | smooth | 200 | – | 0.40 | 500 | 102 | 400-600 |

Table 4

| Nos | Weight increase, % | | | C/H ratio | | Pore volume,cm$^3$/g | |
|---|---|---|---|---|---|---|---|
| | stage | stage | total | stage | stage | within 20-100 Å | within 100-2000 Å |
| 23 | 120 | - | 120 | 0.33 | - | 0.01 | 0.62 |
| 24 | 60 | 60 | 120 | 0.25 | 0.50 | 0.07 | 0.55 |
| 25 | 80 | 40 | 120 | 0.25 | 0.50 | 0.13 | 0.50 |
| 26 | 100 | 20 | 120 | 0.33 | 0.50 | 0.04 | 0.59 |
| 27 | 80 | 120 | 200 | 0.25 | 1.00 | 0.33 | 0.30 |

**Claims**

1. An article made of a porous carbonaceous material with a pore volume of 0.2 to 2.0 cm$^3$/g, **characterized** in that it has a geometrical surface from 0.00001 to 10 m$^2$, a specific surface from 100 to 2000 m$^2$/g and a ratio of an outer geometrical surface to volume from 4 to 100 m$^{-1}$, and the three dimensional carbonaceous material has an interplanar distance from 3.35 to 3.50 Å and a mesoporous structure with a maximum pore size distribution in the range from 100 to 20000 Å.

2. The article is claimed in claim 1, **characterized** in that it has a honeycomb structure, the ratio of thickness of the dividing walls between the channels to that of the outer wall being from 1:2 to 1:10.

3. The article as claimed in claim 1, **characterized** in that the carbonaceous material has further pores with a maximum pore size distribution in the range from 20 to 100 Å.

4. A process for producing an article made of porous carbonaceous material comprising mixing a carbonaceous material, a carbon-containing binder and a solvent, extruding the mixture, drying the articles, heat treating them in a non-oxidizing environment at 500 to 1200 °C and activation, **characterized** in that the carbonaceous material is dispersed carbon, the extrusion is carried out at a pressure from 20 to 60 kg/cm$^2$, the heat treatment is carried out in the presence of gaseous hydrocarbon till the weight of the article is increased by 20 to 200 wt %.

5. The process as claimed in claim 4, **characterized** in that the mixing of the dispersed carbon, the carbon-containing binder and the solvent is carried out, the ratio of the components being as follows (wt %):

| dispersed carbon | 30-60 |
|---|---|
| carbon-containing binder | 2-10 |
| solvent | the balance |

6. The process as claimed in claim 4, **characterized** in that the heat treatment is carried out till the weight of the articles is increased by 120 to 200 wt % first in the presence of gaseous hydrocarbon at a C/H ratio of 0.25 to 0.5 till the weight of the article is increased by 60 to 100 wt %, and then in the presence of gaseous hydrocarbon at a C/H ratio of 0.5 to 1.0.

FIG.1

FIG.2

## INTERNATIONAL SEARCH REPORT

| | International application No. |
|---|---|
| | PCT/RU94/00145 |

**A. CLASSIFICATION OF SUBJECT MATTER**

$IPC^6$ : C01B 31/00, B01J 20/20

According to International Patent Classification (IPC) or to both national classification and IPC

**B. FIELDS SEARCHED**

Minimum documentation searched (classification system followed by classification symbols)

$IPC^6$ : C01B 31/00, 31/02, 31/08, 31/10, B01J 20/20, 21/18

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | GB, A, 2217701 (VSESOJUZNY-NAUCHNO-ISSLE DOVATELSKY INSTITUT TEKNICHESKOGO UG LERODA, 1 November 1989 (01.11.89) --- | 1-3,4-6 |
| A | GB, A, 1093903 (FARBWERKE HOECHST A.G. VORMALS MEISTER LUCIUS & BRUNING), 06 December 1967 (06.12.67)(30.12.82) --- | 1-3,4-6 |
| A | US, A, 4399052 (MORIHIKO SUGINO), 16 August 1983 (16.08.83) ----------- | 1-3,4-6 |

☐ Further documents are listed in the continuation of Box C.     ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January 1995 (05.01.95) | 20 January 1995 (20.01.95) |

| Name and mailing address of the ISA/ RU | Authorized officer |
|---|---|
| | |
| Facsimile No. | Telephone No. |

Form PCT/ISA/210 (second sheet) (July 1992)